# FASCICULE DE BREVET EUROPEEN

(11) **EP 3 471 409 B1**
(45) Date de publication et mention de la délivrance du brevet: **15.07.2026**
(21) Numéro de dépôt: 18196939.5
(22) Date de dépôt: 26.09.2018
(51) Int. Cl.: H04N 9/31, G01C 21/36

(54) **PROCÉDÉ ET SYSTÈME AJUSTANT SÉLECTIVEMENT DES PIXELS, DANS UN MODULE OPTIQUE, POUR RATTRAPER DES DÉFAUTS GÉOMÉTRIQUES DUS AUX TOLÉRANCES DE FABRICATION**
VERFAHREN UND SYSTEM ZUR SELEKTIVEN ANGLEICHUNG VON PIXELN IN EINEM OPTISCHEN MODUL ZUM AUSGLEICH VON GEOMETRISCHEN FEHLERN AUFGRUND VON HERSTELLUNGSTOLERANZEN
METHOD AND SYSTEM SELECTIVELY ADJUSTING PIXELS, IN AN OPTICAL MODULE, TO COMPENSATE FOR GEOMETRICAL FAULTS DUE TO MANUFACTURING TOLERANCES

(30) Priorité: 13.10.2017 FR 1759633
(43) Date de publication de la demande: 17.04.2019
(73) Titulaire: Valeo Vision, 93012 Bobigny Cedex (FR)
(72) Inventeur: GODBILLON, Vincent, 93012 BOBIGNY Cedex (FR); ALBOU, Pierre, 93012 BOBIGNY Cedex (FR)
(74) Mandataire: Valeo Visibility

(56) Documents cités:
- DE-A1- 102016 103 649
- US-A1- 2004 218 401
- US-A1- 2013 069 961
- US-A1- 2014 146 290
- US-A1- 2016 347 237

## Description

La présente invention concerne l'éclairage pour véhicule, par utilisation d'un modulateur à décomposition spatiale en pixels, par exemple sous la forme d'une matrice à micro-miroirs (ou DMD de l'anglais « Digital Micromirror Device ») dont les micro-miroirs sont contrôlables. L'invention concerne plus particulièrement, dans le domaine automobile, un procédé et un système permettant un ajustement des pixels de l'image à projeter afin de rattraper dans l'image projetée des défauts géométriques inhérents à la conception ou l'assemblage de l'optique de mise en forme.

Il est connu un dispositif d'éclairage et/ou de signalisation pour véhicule automobile comprenant une source lumineuse, une matrice de micro-miroirs ou dispositif modulateur similaire permettant de décomposer un faisceau lumineux en pixels répartis selon deux dimensions. La matrice de micro-miroirs est généralement utilisée pour réfléchir les rayons lumineux en provenant de la source lumineuse vers une optique de mise en forme du faisceau lumineux, destinée à projeter la figure formée sur la matrice de micro-miroirs, sous la forme d'un faisceau lumineux sortant. Ce faisceau lumineux permet par exemple d'éclairer la voie sur laquelle circule le véhicule automobile comprenant ce dispositif d'éclairage et/ou de signalisation, ou remplit une fonction de signalisation.

De tels dispositifs d'éclairage sont conçus par des méthodes de production de masse. Il existe obligatoirement un jeu entre les éléments constitutifs du dispositif d'éclairage et/ou de signalisation , d'une part pour permettre un assemblage aisé, et d'autre part parce que les pièces ne sont généralement pas usinées mais plutôt moulés en plastique, ce qui permet de réduire les coûts de production.

Le document DE 10 2016 103649 A1 divulgue un dispositif d'éclairage permettant une émission lumineuse pixelisée, avec une commande individuelle des pixels, afin de produire une image lumineuse de sortie dans l'environnement du dispositif.

Il faut souligner, en particulier, la difficulté à aligner parfaitement un modulateur à décomposition spatiale en pixels (aussi appelé modulateur spatial pixellisé à haute définition, compte tenu du très grand nombre de pixels qu'il est permis d'activer ou désactiver) et la partie optique de projection, généralement sous la forme d'au moins une lentille. Du fait de la grande ouverture numérique de l'objectif utilisé pour la fonction de projection, la qualité de projection de l'image se dégrade significativement dès que le décalage latéral de l'axe optique atteint 50 µm. En outre, il est en pratique compliqué d'aligner dynamiquement la position des éléments (dont fait partie la matrice de micro-miroirs ou dispositif modulateur similaire) lors de la fabrication d'un module optique.

Les tolérances de fabrication et de positionnement des éléments qui composent le système optique peuvent alors conduire à des défauts géométriques, perceptibles sur l'écran de projection interne au dispositif d'éclairage et/ou de signalisation si ce dernier en dispose d'un, ou bien sur un écran placé à l'extérieur lorsque le dispositif d'éclairage et/ou de signalisation est conçu pour projeter un faisceau directement sur la route et ne possède pas d'écran de projection interne.

Egalement, la lentille de projection génère la plupart du temps d'autres aberrations qui rendent floues les images. Le phénomène est accentué par le décalage de position susmentionné.

Ces défauts géométriques s'accentuent lorsqu'une grande ouverture numérique est nécessaire, par exemple avec un coefficient proche de ou de l'ordre de 0,7 (optique grand angle). Il existe donc un besoin de fournir de meilleurs systèmes optiques, notamment pour une grande ouverture numérique, sans recourir à des pièces complexes et coûteuses ni imposer des opérations fastidieuses et coûteuses de réglage pour aligner les éléments entre eux.

L'invention vise donc à éviter que les tolérances de fabrication, qui sont subies au moment de la production, ne se traduisent en défauts géométriques (déformations significatives ou déplacement excessif par rapport à l'axe optique) du faisceau lumineux mis en forme tel qu'il parvient sur l'écran de projection avant de sortir du véhicule ou tel que projeté directement sur la route.

A cet effet, l'invention concerne un procédé de rattrapage de défauts géométriques dans un faisceau lumineux projeté par un module optique pour véhicule automobile, le module optique comportant :
- un dispositif d'imagerie, pourvu d'un modulateur spatial pixellisé à haute définition et d'une optique de projection,
- une source lumineuse pour générer de la lumière destinée au modulateur,
- et optionnellement, un écran de projection adapté pour recevoir un faisceau lumineux transmis par l'optique de projection,

le procédé comprenant les étapes consistant essentiellement à :
   - recevoir une première commande d'affichage d'une image à projeter, destinée au modulateur spatial pixellisé à haute définition ;
   - transformer la première commande d'affichage en une deuxième commande d'affichage qui prend en compte des paramètres de correction,
les paramètres de correction étant prédéfinis sur la base d'une identification de défauts géométriques qui sont propres à l'optique de projection, ce grâce à quoi le modulateur est piloté de façon à ce que l'image effectivement projetée par utilisation du dispositif d'imagerie corresponde mieux à l'image à projeter que sans la prise en compte desdits paramètres de correction, dans lequel l'optique de projection définit une ouverture numérique supérieure à 0,5.

Grâce à ces dispositions, il est permis de contrôler et adapter l'éclairage, en apportant un effet de compensation des défauts qui dézonent certaines parties du faisceau et/ou qui déforment l'aspect de ce faisceau. Ce procédé permet, par une activation ou une désactivation sélective de pixels du modulateur et éventuellement une modulation de la durée d'activation de ces pixels, une adaptation sans recours à un quelconque dispositif mécanique ou pièce additionnelle ayant un impact pour l'encombrement.

On comprend que les défauts géométriques qui sont propres à l'optique de projection correspondent à tous les défauts qui se produisent en aval, suivant le sens de propagation de la lumière dans le module optique, du modulateur spatial pixellisé à haute définition. Il s'agit notamment, de légers défauts d'alignement d'un ou plusieurs éléments constitutifs de l'optique de projection (défauts liés aux tolérances, en particulier latérales) et des défauts structurels inhérents liés à la forme complexe de la lentille de projection.
Le procédé permet de conserver une méthode efficace pour la production en masse de modules optiques, en laissant un degré de tolérance qui facilite les opérations d'assemblage et en minimisant les contraintes de fabrication et le coût des éléments optiques (une lentille parfaite étant couteuse par exemple, tout particulièrement s'il s'agit d'une lentille prévue pour une grande ouverture numérique).

La meilleure correspondance à l'image souhaitée résulte, bien entendu, de la réduction d'écarts ou d'anomalies affectant la perception de l'image projetée. Typiquement, les écarts géométriques ou bien les variations d'épaisseur de lignes, mesurés sur des portions de l'image, sont réduits.

Un autre avantage du procédé est que l'identification de défauts géométriques est réalisée une seule fois, et ne nécessite donc plus d'étapes de comparaison pendant le fonctionnement.

Selon une option, la deuxième commande d'affichage se différencie notamment de la première commande d'affichage par l'activation sélective de tout ou partie d'une rangée de pixels, définie dans une zone de marge (en bordure ou du côté d'une bordure) par le modulateur.

Selon une particularité, les paramètres de correction sont adaptés pour modifier des statuts d'activation des pixels afin de compenser l'un au moins parmi les défauts suivants :
- un décalage latéral du contour du faisceau lumineux transmis par l'optique de projection ;
- une déformation du contour du faisceau lumineux transmis par l'optique de projection.

Selon une particularité, les paramètres de correction compensent des effets de distorsion par détermination dans le modulateur de décalages en position à appliquer sélectivement pour des zones de pixels préalablement identifiées pendant une phase de calibration permettant une identification de défauts géométriques. En pratique, ce sont typiquement des effets d'étirement ou des contractions qui finissent, à cause du côté discret du modulateur, par se traduire par des décalages, mais également par des variations de luminance, c'est-à-dire des variations de niveaux de gris si on raisonne en image numérique. Il est à noter que l'expression niveaux de gris s'applique à la variation de luminance indépendamment de la couleur effective du faisceau lumineux. Ainsi elle correspond à une indication de la luminance du faisceau, que celui-ci soit blanc ou présente une couleur, par exemple rouge ou ambre ou de toute autre couleur,

Selon une autre particularité, les paramètres de correction et/ou la deuxième commande d'affichage sont stockés dans une mémoire à la disposition d'une unité de contrôle. Typiquement, cette unité de contrôle permet d'activer la deuxième commande d'affichage.

On comprend que la mémoire dont dispose l'unité de contrôle peut permettre de stocker des données représentatives de la calibration, en particulier les paramètres de correction, et/ou une ou plusieurs images prédéfinies qui correspondent au résultat de la correction.

Selon une particularité, les paramètres de correction sont obtenus après :
- l'obtention, par utilisation d'au moins une mire, d'une série déterminée d'informations de décalage, relatives aux différences de position et de forme affectant la mire telle que projetée (projection sur un écran de projection interne au module, adapté pour recevoir un faisceau lumineux transmis par l'optique de projection, ou projection directement vers l'extérieur),
   - calcul de paramètres de correction à appliquer au faisceau lumineux transmis depuis le modulateur en fonction de la série déterminée d'informations de décalage,
   - activation ou désactivation d'un ou plusieurs pixels du modulateur en fonction des paramètres de correction ; ceci repose typiquement sur une réserve de pixels non utilisés lorsque le système est bien réglé, pixels que l'on utilise pour les corrections quand elles nécessitent de déplacer (décalages, tolérances) et/ou d'agrandir l'image (distorsion) qui sera projetée.

Selon une particularité, pour compenser la distorsion (liée à la conception de l'optique ou au jeu latéral), on décompose les pixels du modulateur en zones et on calcule pour chaque zone le décalage à appliquer pour obtenir la bonne forme projetée. Le découpage en zone peut permettre de définir au moins quatre zones (optionnellement de superficie égale), et de préférence au moins neuf zones par exemple.

Selon une particularité, une commande d'affichage d'une mire est stockée dans une mémoire dont dispose l'unité de contrôle, la mire étant affichée dans une étape préalable d'identification et de définition des paramètres de correction.

Selon une particularité, au niveau du modulateur, la mire s'étend de préférence sur un secteur central et au moins sur quatre secteurs complémentaires et de taille égale entre eux, formés autour du secteur central. On comprend que la mire s'étend pour partie à distance d'une zone centrale des pixels du modulateur, ce qui permet d'identifier certains défauts auxquels correspondent des paramètres de correction.

Selon une particularité, pour compenser le flou, on utilise une mire définissant des motifs souhaités et on calcule la réduction du nombre de pixels "actifs" à appliquer au modulateur pour projeter une mire qui présente les mêmes délimitations de motifs que pour les motifs souhaités, ainsi que le ratio de pixels "actif/inactif" à appliquer pour compenser la baisse de flux liée à la réduction de pixels utilisés. Plus généralement, certaines lignes vont être amincies pour qu'une fois projetées elles aient l'épaisseur voulue. Cela peut améliorer certains contours, en particuliers ceux parallèles aux lignes de la mire.

Un procédé conforme à l'invention peut comporter l'une ou plusieurs des caractéristiques suivantes :
- le modulateur présente une unique entrée d'alimentation électrique et permet d'activer sélectivement un nombre de pixels supérieur ou égal à 1000.
- l'activation est optionnellement permise par un pilotage d'un mouvement d'un élément mobile prévu dans chaque micro-miroir d'une matrice de micro-miroirs (chaque micro-miroir mobile ayant au moins deux positions dont l'une est active et l'autre inactive pour l'éclairage).
- les paramètres de correction sont adaptés pour modifier des durées ou des fréquences d'activation des pixels afin de compenser une perte de netteté de l'image projetée, notamment près de la périphérie du faisceau lumineux transmis par l'optique de projection (il est permis de manipuler les luminances ou niveaux de gris). La perte de netteté peut, le plus souvent, être définie comme un élargissement du motif avec apparition d'au moins un bord flou.
- l'identification de tout ou partie des défauts géométriques comprend les étapes suivantes :
   a) allumer la source lumineuse ;
   b) rendre actif une série de pixels définis par le modulateur pour créer une mire répartie dans différentes zones à pixels du module, la série de pixels ayant un contour, continu ou discontinu, permettant de définir un paramètre de forme prédéfini de la mire, et
   c) utiliser la mire afin de définir tout ou partie des paramètres de correction.
- l'étape c) comprend l'une au moins des sous-étapes suivantes :
   i) comparer le paramètre de forme de la mire telle que projetée au paramètre de forme prédéfini,
   ii) définir les paramètres de correction en fonction de résultats de comparaison obtenus à la sous étape i).
- l'étape c) comprend les sous-étapes suivantes :
   - estimer un paramètre représentatif d'un flou dans la mire telle que projetée,
   - utiliser au moins une compensation de flou dans les paramètres de correction en fonction du dépassement ou non d'un seuil de netteté par le paramètre estimé.

Selon une particularité, le faisceau transmis depuis le modulateur est de type segmenté en présentant au moins une coupure.

Selon une particularité, le faisceau sortant du module optique est un faisceau de type code segmenté (la coupure est une coupure horizontale de type code, par exemple formée par un ou plusieurs bords supérieurs d'un ou plusieurs segments du faisceau) ou de type route segmenté (la coupure est une coupure verticale, par exemple formée par un ou plusieurs bords latéraux d'un ou plusieurs segments du faisceau).

Selon une option, le faisceau segmenté comporte au moins une ligne de segment lumineux résultant par exemple de segments horizontalement juxtaposés ou partiellement superposés, chaque segment lumineux étant associé à tout ou partie d'une rangée de pixels activables sélectivement, l'activation de cette rangée ou portion de rangée de pixels entraînant l'allumage dudit segment lumineux.

Selon une particularité, la source lumineuse est un élément électroluminescent ou un groupe d'éléments électroluminescents, par exemple une ou plusieurs diodes LED. Chacun de ces éléments peut être relié à un circuit de commande appartenant à l'unité de contrôle.

La commande des pixels par l'unité de contrôle apporte une flexibilité de réglage et on comprend que ce contrôle permet d'ajuster avec finesse l'image projetée (image qui peut être projetée à l'infini depuis l'optique de projection ou depuis l'écran de projection).

Un autre objet de l'invention est de proposer un système lumineux pour corriger au moins en partie les déformations indésirables dans faisceau projeté, causées par certaines tolérances de fabrication d'un module optique du type à modulateur spatial pixellisé à haute définition.

A cet effet, il est proposé un système lumineux pour véhicule automobile, permettant la mise en oeuvre du procédé décrit précédemment, le système comportant :
- un module optique comprenant :
- un dispositif d'imagerie, pourvu d'un modulateur spatial pixellisé à haute définition et d'une optique de projection,
- une source lumineuse pour générer de la lumière destinée au modulateur,
- et optionnellement un écran de projection adapté pour recevoir un faisceau lumineux transmis par l'optique de projection (écran non prévu lorsque le faisceau lumineux est destiné à être projeté à l'infini, c'est-à-dire à une grande distance du système lumineux, une distance au moins 10 fois supérieure, en particulier 20 fois supérieure, notamment 100 fois supérieure aux dimensions du système lumineux) ;
- une unité de contrôle du modulateur, conçue et agencée pour piloter le modulateur et adapté pour recevoir des premières commandes d'affichage, chacune des premières commandes d'affichage étant représentative d'une image à projeter ;

l'unité de contrôle comprenant des moyens d'ajustement pour convertir chaque première commande d'affichage en une deuxième commande d'affichage qui prend en compte des paramètres de correction,
les paramètres de correction étant prédéfinis sur la base d'une identification de défauts géométriques qui sont propres à l'optique de projection, l'unité de contrôle pilotant le modulateur en fonction des deuxièmes commandes d'affichage afin que l'image effectivement projetée par le dispositif d'imagerie corresponde mieux à l'image à projeter que sans la prise en compte des paramètres de correction, dans lequel l'optique de projection définit une ouverture numérique supérieure à 0,5.

Selon une particularité, le modulateur spatial pixellisé à haute définition comprend une matrice de micro-miroirs, les micro-miroirs de la matrice de micro-miroirs étant déplaçables chacun entre :
- une première position dans laquelle le micro-miroir est agencé pour réfléchir, en direction de l'optique de projection, des rayons lumineux lui parvenant de la source lumineuse ou d'une unité d'émission de rayons lumineux qui inclut la dite source lumineuse.
- et une deuxième position dans laquelle le micro-miroir est agencé pour réfléchir les rayons lumineux lui parvenant de la source lumineuse ou d'une unité d'émission de rayons lumineux qui inclut la dite source lumineuse, à l'écart de l'optique de projection (en dehors de la pupille d'entrée de l'optique de projection).

Selon une particularité, l'optique de projection définit un grand angle d'ouverture, pour, de préférence, une ouverture numérique supérieure à 0,5 et de préférence supérieure à 0,7.

Un système lumineux conforme à l'invention peut comporter l'une ou plusieurs des caractéristiques suivantes :
- le modulateur spatial pixellisé à haute définition est éclairé par la source lumineuse dans une zone éclairée et définit une pluralité déterminée de pixels répartis en rangées parallèles de pixels, une première rangée au moins de pixels pouvant éventuellement être située initialement en dehors de la zone éclairée en raison d'un surdimensionnement du modulateur spatial.
- une zone de marge pour permettre le surdimensionnement correspond à une zone périphérique ayant un format de cadre, afin de définir un surplus de pixels en haut, en bas, à gauche et à droite de la surface nominale qui suffit à créer l'image souhaitée en cas d'absence de défauts géométriques (dans le cas d'une matrice à micro-miroirs, un avantage associé au surdimensionnement est également la possibilité, si souhaité, de limiter l'échauffement causé par un éclairage sur la bordure non réfléchissante de la matrice).
- la surface active où sont définis les pixels peut présenter, dans une ou zones de marge, un surplus de pixels par rapport à un format de pixels défini dans chacune des premières commandes d'affichage (ce grâce à quoi il est permis de rattraper un défaut de décentrage ou une distorsion en barillet, pour laquelle il faut agrandir l'image dans les coins ou une distorsion en coussinet pour laquelle il faut dilater l'image vers le centre de ses bords).
- l'unité de contrôle est adaptée pour contrôler sélectivement le modulateur spatial pixellisé à haute définition afin d'activer sélectivement une ou plusieurs zones de marge situées le long de bords ou portions de bord de la surface active où sont définis les pixels, en fonction des paramètres de correction (bien entendu, le terme « activer » peut simplement signifier qu'on passe un ou plusieurs pixels/miroirs à l'état actif).
- le dispositif d'imagerie est adapté pour projeter un faisceau lumineux sortant de type segmenté présentant au moins une coupure.
- les pixels du modulateur spatial pixellisé à haute définition sont répartis le long d'un ou parallèlement à un premier axe et définissent des rangées parallèles au premier axe qui sont réparties à différents niveaux suivant un deuxième axe perpendiculaire au premier axe, sachant que le premier axe correspond typiquement à un axe horizontal et le deuxième axe correspond à un axe sensiblement vertical, dans une configuration de fonctionnement du système lumineux dans un véhicule automobile.
- l'unité de contrôle dispose d'une mémoire stockant les paramètres de correction et/ou des informations représentatives des deuxièmes commandes d'affichage.

Selon une autre particularité, le système lumineux comporte deux modules optiques comportant chacun :
- un dispositif d'imagerie, pourvu d'un modulateur spatial pixellisé à haute définition et d'une optique de projection, et
- une source lumineuse pour générer de la lumière destinée au modulateur, chaque faisceau lumineux transmis par l'une des optiques de projection étant reçu sur au moins un écran de projection.

Préférentiellement, l'unité de contrôle est configurée pour piloter le modulateur de chacun des deux modules optiques en prenant en compte un premier ensemble de paramètres de correction associé à un premier des deux modules optiques et un deuxième ensemble de paramètres de correction associé à un deuxième des deux modules optiques. Typiquement, les paramètres de correction du premier ensemble sont prédéfinis sur la base d'une identification de défauts géométriques qui sont propres à l'optique de projection dans le premier module optique, tandis que les paramètres de correction du deuxième ensemble sont prédéfinis sur la base d'une identification de défauts géométriques qui sont propres à l'optique de projection dans le deuxième module optique.

Il peut être proposé, en outre, un feu d'éclairage et/ou de signalisation de véhicule automobile, pour projeter au moins un faisceau lumineux, le feu comprenant :
- un boîtier ;
- une glace de fermeture ; et
- un système lumineux conforme à l'invention.

Il peut être prévu, par ailleurs, de former un ensemble lumineux, qui présente un premier composant et un deuxième composant formés par:
- deux feux ;
- deux projecteurs ; ou
- un feu et un projecteur,
l'ensemble lumineux étant pourvu d'un système lumineux à deux modules optiques tel que susmentionné, les deux modules optiques étant répartis l'un dans le premier composant et l'autre dans le deuxième composant.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 représente schématiquement un exemple de projecteur d'éclairage pour véhicule automobile comprenant un module optique et implémentant un rattrapage de défauts géométriques ;
- la figure 2 représente schématiquement en coupe un détail d'une matrice de micro-miroirs formant le modulateur spatial pixellisé à haute définition, utilisée dans le module optique de la figure 1 ;
- la figure 3 illustre de façon simplifiée le paramétrage des pixels du modulateur par repérage selon deux axes de la surface du modulateur qui est active pour la production du faisceau sortant du module optique, afin de permettre d'ajuster l'image effectivement projetée ;
- la figure 4 est un diagramme d'étapes mises en oeuvre conformément à un procédé de rattrapage de défauts géométriques selon l'invention ;
- les figures 5A et 5B montrent de façon schématique, respectivement une répartition lumineuse qui serait correcte en l'absence de défauts géométriques significatifs dans l'optique, et la répartition lumineuse devant être effectivement paramétrée pour obtenir le rendu photométrique souhaité, compte tenu des défauts géométriques.
- la figure 6A illustre un exemple de déformation observé entre l'image commandée et l'image qui apparaît sur l'écran de projection du module optique, en l'absence de correction.
- la figure 6B illustre, par une vue de détail de la figure 6A, un exemple de déformation observé avec un effet de flou qui rend plus épais certains motifs de l'image projetée.

Sur les différentes figures, les mêmes références désignent des éléments identiques ou similaires. Certains éléments peuvent avoir été agrandis sur les dessins, afin de faciliter la compréhension.

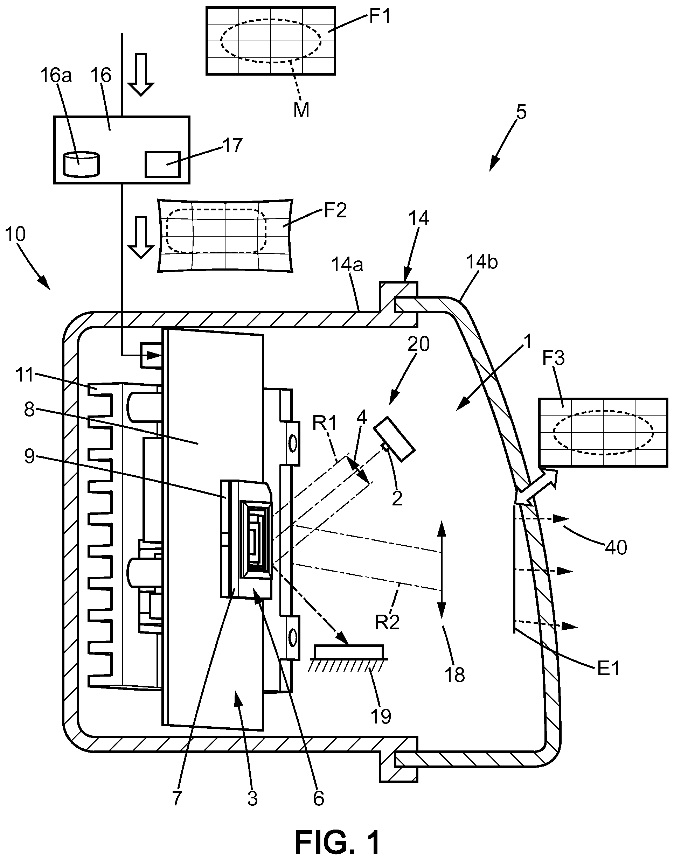

La figure 1 représente un premier mode de réalisation d'un module optique 1 pouvant former ou faire partie d'un système lumineux 5 de véhicule automobile, par exemple un feu avant ou un feu arrière. Le module optique 1 forme un dispositif d'émission lumineuse configuré pour mettre en œuvre une ou plusieurs fonctions, certaines de ces fonctions pouvant faire l'objet de réglementations photométriques.

Le module optique 1 comprend, tel qu'illustré, une unité d'émission de rayons lumineux 20, une matrice de micro-miroirs 6 (ou DMD, pour l'anglais « Digital Micromirror Device »), une unité de contrôle 16, par exemple sous la forme d'un contrôleur 16, permettant de commander des micro-miroirs 12 de la matrice de micro-miroirs 6 et une optique de projection 18 (ou optique de mise en forme). L'unité de contrôle 16 peut être optionnellement délocalisée, par exemple pour permettre de contrôler plusieurs modules optiques 1. On comprend que le système lumineux 5 pour véhicule automobile peut recevoir des commandes initiées de façon centralisée et correspondant par exemple à une commande d'une fonction d'éclairage et/ou de signalisation ou une autre fonction photométrique.

Une fonction photométrique préférée associée au module optique 1 est une fonction d'éclairage et/ou de signalisation visible pour un œil humain. Ces fonctions photométriques peuvent faire l'objet d'une ou plusieurs règlementations établissant des exigences de colorimétrie, d'intensité, de répartition spatiale selon une grille dite photométrique, ou encore de plages de visibilité de la lumière émise.

Le module optique 1 est par exemple un dispositif d'éclairage constituant un projecteur 10 - ou phare - de véhicule. Il est alors configuré pour mettre en œuvre une ou plusieurs fonctions photométriques par exemple choisie(s) parmi une fonction de feux de croisement dite « fonction code », une fonction de feux de route dite « fonction route », une fonction antibrouillard.

Alternativement ou parallèlement, le module optique 1 est un dispositif de signalisation destiné à être agencé à l'avant ou à l'arrière du véhicule automobile.

Lorsqu'il est destiné à être agencé à l'avant, les fonctions photométriques pouvant être mises en œuvre par utilisation du module optique 1 (éventuellement en sus de celles qu'il met en œuvre en sa qualité de dispositif d'éclairage) incluent une fonction d'indication de changement de direction, une fonction d'éclairage diurne connue sous l'acronyme anglophone DRL, pour « Daytime Running Light », une fonction de signature lumineuse avant, une fonction de feux de position, une fonction dite « Side-marker », qui vient de l'anglais et peut être traduit par signalisation latérale.

Lorsqu'il est destiné à être agencé à l'arrière, ces fonctions photométriques incluent une fonction d'indication de recul, une fonction stop, une fonction antibrouillard, une fonction d'indication de changement de direction, une fonction de signature lumineuse arrière, une fonction lanterne, une fonction de signalisation latérale.

Il est prévu une source lumineuse 2, qui fait ici partie de l'unité 20, pour générer les rayons lumineux, qui forment un rayonnement R1 orienté vers la matrice de micro-miroirs 6. La source lumineuse 2 peut consister en un élément électroluminescent tel qu'une diode électroluminescente (ou DEL) ou une matrice de DEL. Dans le cas d'un groupe d'éléments électroluminescents, ceux-ci sont de préférence resserrés dans une même zone assimilable à une source unique d'éclairage. Une diode laser, le cas échéant couplé avec système collimateur et éventuellement un dispositif de conversion de longueur d'onde, peut aussi permettre de former le rayonnement R1.

Dans le cas d'une fonction de signalisation d'un feu arrière, la source lumineuse 2 peut être rouge. Dans le cas d'une fonction pour un feu avant, la source de lumière 2 est de préférence blanche.

Bien que les dessins montrent une matrice de micro-miroirs 6, on comprend que les rayons lumineux émis par la source de lumière 2 peuvent être dirigés, au moyen d'une optique adaptée, vers tout type de modulateur spatial pixellisé à haute définition 3, qui permet de décomposer le rayonnement reçu R1 en pixels. Dans une variante de réalisation, une matrice de pixels pourvue de surfaces actives au plan optique sous la forme de pixels, de type « LCD » (de l'anglais Liquid Crystal Display), peut être utilisée. Un dispositif à écran LCD transmissif peut en effet convenir et, dans ce cas le trajet optique du rayonnement R1 peut être remplacé par un trajet optique interne au dispositif à LCD, le cas échéant sans détours. Plus généralement, on comprend qu'un premier rayonnement R1 peut être reçu sur une surface subdivisée de façon très fine pour définir des pixels avec une haute définition, avec typiquement plus de 1280 par 720 pixels, et dont il est possible de moduler les configurations. Le changement d'état est de préférence permis pour chaque pixel, de façon connue en soi.

L'unité d'émission de rayons lumineux 20 peut également être pourvue de la lentille de collimation 4 adaptée pour orienter le rayonnement R1 sur le modulateur 3. On peut aussi avoir, dans cette unité 20, des optiques « d'imagerie » donnant un faisceau convergent.

Dans l'exemple illustré sur la figure 1, on préfère utiliser une lentille de collimation 4 ou un ensemble de lentilles de collimation pour recevoir la lumière de la source lumineuse 2, de sorte que la lumière collimatée est reçue sur une face active, sensiblement rectangulaire, de la matrice de micro-miroirs 6.

A titre d'exemple non limitatif, une lentille convergente peut permettre de réaliser la collimation. Dans ce cas, la source de lumière 2 est avantageusement disposée au voisinage du foyer objet de la lentille convergente afin d'assurer une forme sensiblement en faisceau des rayons lumineux du rayonnement R1 se propageant entre l'unité d'émission de rayons lumineux 20 et la matrice de micro-miroirs 6. Alternativement ou au surplus, l'unité d'émission de rayons lumineux 20 comporte un miroir réfléchissant. Dans ce cas, la source de lumière 2 est avantageusement disposée au voisinage du foyer objet de ce miroir réfléchissant.

Le projecteur 10 pour véhicule automobile illustré sur la figure 1 peut être logé dans un boîtier 14 ou être délimité par ce boîtier 14. Le boîtier 14, tel qu'illustré, comporte un corps 14a formant un espace intérieur creux recevant au moins en partie le module optique 1. Un couvercle 14b, au moins en partie transparent, est couplé au corps 14a pour fermer l'espace intérieur. Tel qu'illustré, le couvercle 14b forme également un creux, recevant partiellement le module optique 1, notamment tout ou partie de l'optique de projection 18.

Le couvercle 14b est par exemple réalisé en résine plastique ou autre matière plastique adaptée. Le projecteur d'éclairage 10 peut inclure plusieurs modules optiques 1 qui sont alors adaptés à émettre des faisceaux voisins, les faisceaux se chevauchant, de préférence, en partie. Notamment, les extrémités latérales des faisceaux voisins peuvent être superposées. On peut aussi superposer le bord inférieur de l'un avec le bord supérieur de l'autre dans une autre répartition des faisceaux, par exemple pour faire des modifications de faisceaux de façon numérique, et obtenir des fonctions de faisceau de conduite adaptatif de type ADB (de l'anglais « Adaptive Driving Beam ») et de faisceau d'éclairage directionnel dynamique connu sous l'acronyme DBL (de l'anglais « Dynamic Bending Light »).

Ici l'optique de projection 18 permet la mise en forme du rayonnement réfléchi R2 après la réflexion sur la matrice de micro-miroirs 6, en permettant de définir un faisceau sortant 40. Plus généralement, le dispositif d'imagerie prévu dans le module optique 1 inclut le modulateur spatial pixellisé à haute définition 3 et l'optique de projection 18.

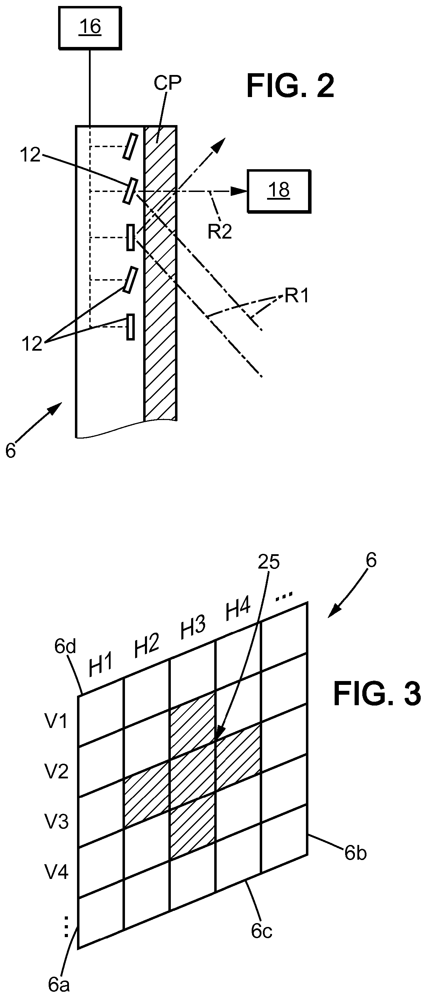

La matrice de micro-miroirs 6 est par exemple rectangulaire, comme illustré sur les figures 1 et 3. La matrice de micro-miroirs 6 s'étend ainsi principalement selon une première direction d'extension, entre des extrémités latérales 6a, 6b de la matrice de micro-miroirs 6. Selon une deuxième direction d'extension, qui peut correspondre à une dimension verticale (hauteur), on trouve aussi deux bords d'extrémité 6c, 6d opposés qui sont typiquement parallèles entre eux.

Comme visible sur la figure 2, la matrice de micro-miroirs 6 peut être optionnellement recouverte d'une couche CP de protection des micro-miroirs 12 qui est transparente. L'axe de pivotement de chacun des micro-miroirs 12 peut permettre par exemple une rotation de plus ou moins 10° par rapport à une position nominale sans rotation.

En référence à la figure 1, la matrice de micro-miroirs 6 est ici essentiellement définie par une puce électronique 7, fixée à une carte de circuit imprimé 8 via une douille (ou « socket ») 9 adaptée. Un dispositif de refroidissement, ici un radiateur 11, est fixé à la carte de circuit imprimé 8 pour refroidir la carte de circuit imprimé 8 et/ou la puce 7 de la matrice de micro-miroirs 6. Pour refroidir la puce 7 de la matrice de micro-miroirs 6, le radiateur 11 peut présenter un relief saillant traversant une ouverture dans la carte de circuit imprimé 8 pour être en contact avec cette puce 7, la douille 9 laissant libre un passage pour ce relief saillant. Une pâte thermique ou tout autre moyen favorisant les échanges thermiques, accessible à l'homme de l'art, peut être interposé entre le relief saillant et la matrice de micro-miroirs 6.

L'unité de contrôle 16 est ici reliée à la matrice de micro-miroirs 6 ou autre type de modulateur spatial pixellisé à haute définition 3, par exemple à travers la plaque de circuit imprimé 8. L'unité de contrôle 16 peut ici commander des changements de position de chacun des micro-miroirs 12 de la matrice de micro-miroirs 6. Dans le cas d'une matrice de pixels de type LCD, les états de pixels sont également contrôlables de façon similaire par l'unité de contrôle 16. Une telle unité de contrôle 16 peut faire partie du projecteur 10 en étant intégrée dans le boîtier 14 ou bien elle peut être séparée et délocalisée à distance du module optique 1.

Il peut être considéré que l'unité de contrôle 16 fait partie du système lumineux 5 qui combine les fonctions de projection lumineuse et de correction des commandes d'affichage.

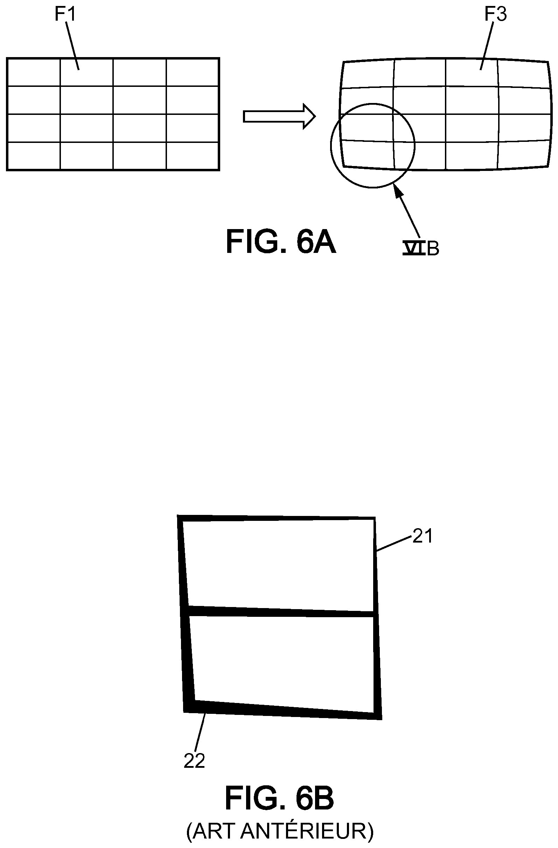

La figure 6A montre un exemple de déformation observé dans l'art antérieur entre l'image F1 envoyée au modulateur 3 et l'image F3 qui apparaît sur l'écran de projection E1 du module optique, en l'absence de correction. La figure 6B illustre en outre le problème de flou avec un éclairage particulièrement inhomogène, créant des sous zones amincies 21 et des sous-zones élargies 22.

Comme illustré sur la figure 1, l'unité de contrôle 16 est configurée pour corriger au moins partiellement les distorsions provoquées par l'optique d'imagerie, en générant une commande d'affichage F2 qui déforme le motif de pixels à activer normalement sur le modulateur 3 (motif correspondant à la commande d'affichage initiale, ou première commande d'affichage F1, dont une représentation est visible en haut de la figure 1). La deuxième commande d'affichage F2 prend en compte des paramètres de correction afin de compenser les distorsions, provoquées généralement par des défauts de courbure d'une lentille ou autre élément optique.

Par exemple, une ligne normalement verticale, telle qu'apparaissant dans le chiffre "1", pourrait être courbée concave vers la gauche par de telles distorsions lorsqu'il est projeté sur l'écran de projection E1. Pour corriger ce type de distorsion, les pixels pertinents sur le modulateur 3 qui sont activés pour former cette ligne verticale sont changés de pixels qui sont en ligne droite en pixels qui sont courbés concave vers la droite (ou concave vers la gauche, si d'autres éléments optiques sont présents qui inversent la direction de courbure perçue par le conducteur). Ce changement est intégré, sous la forme d'un paramètre de correction, dans la commande d'affichage F2.

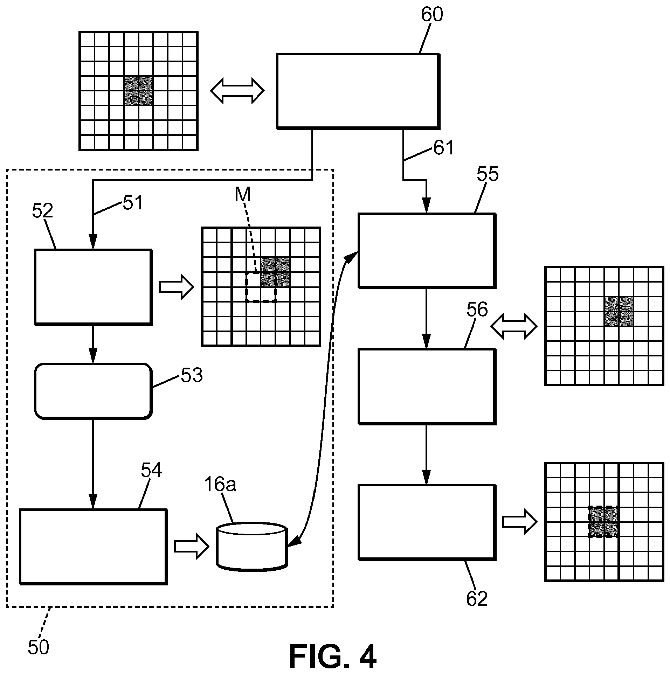

Le degré de "courbure" ou de compensation de la distorsion de l'optique d'imagerie qui est programmée dans les pixels du modulateur 3 peut être obtenu par utilisation d'une mire M, lors d'une phase initiale de calibration 50 (cf. figure 4) permettant d'identifier et définir les paramètres de correction.

Pour permettre de compenser le défaut de centrage (et éventuellement la déformation du périmètre), la mise en oeuvre d'une compensation de ce type de distorsion d'image peut nécessiter une distribution de pixels avec un nombre de pixels supérieur à celui qui serait nécessaire si aucune correction de distorsion d'image n'était appliquée.

En effet, alors que le modulateur spatial pixellisé à haute définition 3 est éclairé par la source lumineuse 2 dans une zone éclairée délimitée par un périmètre, ce modulateur 3 peut définir une pluralité déterminée de pixels 30 répartis en rangées parallèles de pixels, avec un surplus de pixels qui est tel qu'on peut trouver au moins une première rangée de pixels située en dehors du périmètre de la zone éclairée. Le modulateur 3 est alors surdimensionné, par exemple de quelques dizaines de micromètres ou d'une centaine de micromètres, de façon à présenter ce type de rangées de pixels à la marge. Cette première rangée de pixels, distale d'un point central de symétrie du modulateur 3, ne pourra pas être utilisée. Mais, du fait du surdimensionnement, une autre rangée distale de pixels, parallèle et opposée à la première rangée pourra être utilisée si cela est rendu nécessaire pour compenser des défauts géométriques, en particulier un défaut de centrage, affectant la projection. Ainsi, la deuxième commande d'affichage F2 peut se différencier de la première commande d'affichage F1 par l'activation sélective de tout ou partie d'une telle autre rangée distale de pixels. Ceci est applicable pour une compensation d'un défaut de centrage de la zone éclairée sur le modulateur 3. L'unité de contrôle 16 peut aussi permettre de compenser les défauts de centrage de l'optique de projection (et non des éléments en amont 4 et 2). Dans ce cas, il est prévu d'éclairer toute la matrice 6, y compris les pixels de réserve (ce qui pourra permettre de corriger ensuite la distorsion).

En référence à la figure 1, l'unité de contrôle 16 peut présenter une mémoire 16a et des moyens d'ajustement 17 pour modifier l'état de fonctionnement des pixels définis par le modulateur 3. Dans le cas d'une matrice de micro-miroirs 6, les moyens d'ajustement 17 permettent de commander le déplacement des micro-miroirs 12. Comme illustré schématiquement sur la figure 2, seulement une partie des micro-miroirs 12 qui ont une première position dévient de façon efficace le rayonnement R1, parvenant de la source lumineuse 2 ou d'une unité d'émission de rayons lumineux 20, pour transmettre l'énergie lumineuse dans le rayonnement réfléchi R2 qui est dirigé vers l'optique de projection 18. Les autres micro-miroirs 12 sont dans une deuxième position inactive (position inefficace pour récupérer la radiation lumineuse dans l'optique de projection 18) ou éventuellement se situent en dehors de la zone éclairée du modulateur 3.

Ici, dans la matrice de micro-miroirs 6, chacun des micro-miroirs 12 est déplaçable entre :
- la première position dans laquelle le micro-miroir 12 réfléchit des rayons lumineux incidents du rayonnement R1 en direction de l'optique de projection 18,
- et la deuxième position dans laquelle le micro-miroir 12 transmet par réflexion les rayons lumineux incidents du rayonnement R1 à l'écart de l'optique de projection 18, par exemple vers un dispositif 19 d'absorption de radiations qui présente une surface absorbante de lumière.

En référence à la figure 3, l'unité de contrôle 16 peut définir une commande d'affichage correspondant à une figure ou à un motif 25 sur la matrice 6. Ici il s'agit d'une une croix mais cela pourrait être une forme annulaire, un caractère alphanumérique ou tout autre élément géométrique aisément repérable sous la forme de coordonnées (coordonnées horizontales H1, H2, H3, H4, etc. et coordonnées verticales V1, V2, V3, V4, etc. comme sommairement illustré sur la figure 3) ou de vecteurs. En fonction de paramètres de correction pris en compte par l'unité de contrôle 16, la routine appliquée par les moyens d'ajustement 17 peut consister à modifier la position, la forme et/ou ajuster l'éclairage sur les zones de périphérie du motif 25 afin de compenser les distorsions et aberrations identifiées et calibrées lors d'une identification des défauts géométriques.

Une table de vecteurs peut être typiquement déterminée lors d'une telle étape, afin de modifier sélectivement l'état des pixels du modulateur 3. Une telle table de vecteurs peut lister des micro-miroirs 12 dont l'activation est à supprimer sélectivement, lesquels ont été déterminés comme correspondant à des zones de réflexion lumineuse « en trop » dans une étape de calibration initiale, des micro-miroirs 12 à activer sélectivement en sus pouvant aussi être spécifiés dans cette table, en correspondance avec la détermination de zones de réflexion lumineuse « manquantes » dans l'étape de calibration initiale.

Pour le cas d'utilisation d'une matrice de micro-miroirs 6, les moyens d'ajustement 17 prennent ainsi en compte la table de vecteurs pour que les pixels actifs soient réajustés. Typiquement, la mémoire 16a de l'unité de contrôle 16 stocke les données représentatives des décalages en position induits par les défauts géométriques propres à l'optique de projection 18. Ces données peuvent déjà intégrer des compensations à appliquer pour corriger de tels décalages ou un programme peut être inclus dans les moyens d'ajustement 17 pour déduire de ces données la compensation à appliquer. De telles données de décalage en position forment tout ou partie des paramètres de correction.

Ces données peuvent être accompagnées de facteurs à appliquer aux niveaux de gris, voire de coefficients de combinaisons linéaires des valeurs des niveaux de gris des pixels voisins donnant le niveau de gris à donner au nouveau pixel (pixel déplacé). Typiquement, on peut prévoir que les déplacements soient calculés pour chaque pixel individuellement, ainsi que les facteurs à appliquer aux niveaux de gris, par interpolation des valeurs trouvées sur les quelques points de la mire M.

Pour le défaut de centrage, la figure 1 illustre schématiquement la déformation inverse nécessaire à appliquer dans la deuxième commande d'affichage F2, afin de compenser simultanément la déformation du type montrée sur la figure 6A, constatée en l'absence de correction.

En référence à la figure 4, le procédé de rattrapage de défauts géométriques dans le faisceau lumineux projeté par le module optique 1 peut présenter une phase de calibration 50, mise en oeuvre de préférence avant la première utilisation effective du module optique 1 dans un véhicule automobile. Dans cet exemple non limitatif, la phase de calibration 50 est initiée à la suite d'une étape 60 de mise en marche du module optique 1, dans laquelle une première commande d'affichage, est transmise au modulateur 3b. Cette première commande correspond ici à une commande par défaut, prévue sans prise en compte des aléas de montage ou de structure propres à l'optique de projection 18 et donc seulement appropriée en l'absence de défauts géométriques.

La phase de calibration 50 commence avec l'étape 51 de réception de la première commande par le modulateur 3. Il s'ensuit une étape 52 de génération d'une configuration d'utilisation des pixels. La figure 4 illustre un cas où la première commande d'affichage se traduit essentiellement par un décalage lié à un défaut de centrage. Une étape 53 d'identification des défauts peut alors commencer, de préférence par utilisation d'une mire M qu'il est permis d'observer sur l'écran de projection E1.

Le terme « mire » est ici à comprendre dans un sens habituel en optique. En prenant en compte le contexte d'un éclairage se décomposant en pixels 30, une mire correspond ainsi généralement à un ensemble de traits/éléments de motifs de largeurs et d'orientations différentes. La mire M sert ici à étudier notamment les limites de netteté, les déformations et effets de distorsion qui sont constatés au moment de la projection du rayonnement R2 par l'optique de projection 18.

Pendant la phase de calibration 50, la collecte et l'analyse des informations de décalages en position et autres aberrations est préférentiellement automatisée, par exemple en utilisant des capteurs et un programme de traitement d'image et d'identification des défauts, par comparaison entre la position attendue des points remarquables de la mire M et la position effectivement obtenue. La mire M est par exemple générée en rendant actif une série de pixels prédéfinie et qui présente au moins un contour, continu ou discontinu, permettant de définir un paramètre de forme de la mire M.

Optionnellement, on peut générer une mire M qui s'étend sur l'ensemble de la matrice de micro-miroirs 6, afin d'identifier le plus exhaustivement possible les défauts. Dans une telle mire M, des transitions entre des pixels foncés ou noirs et des pixels clairs sont de préférence nombreuses et réparties dans toutes les zones de pixels, ce qui peut alors permettre de générer un motif 25 qui est évidemment plus étendu et typiquement plus complexe que celui montré à titre d'illustration sur la figure 3.

A l'étape 53 d'identification des défauts, on repère des informations de décalage et on génère une série déterminée d'informations de décalage, relatives aux différences de position et de forme affectant la mire M telle que projetée sur l'écran de projection E1. Ensuite, les paramètres de correction peuvent être obtenus dans une étape 54 au cours de laquelle les paramètres de correction, à appliquer pour permettre de modifier le faisceau lumineux à transmettre depuis le modulateur 3, sont calculés en fonction de la série déterminée d'informations de décalage.

La mémoire 16a peut alors stocker les informations représentatives de ces paramètres de correction. Pour les sollicitations ultérieures du module optique 1, ces paramètres de correction seront systématiquement pris en compte, de façon à modifier l'activation ou la désactivation de certains des pixels du modulateur 3.

Typiquement, par les étapes 53 et 54, un ou plusieurs paramètres de forme de la mire M telle que projetée peuvent être comparés au(x) paramètre(s) de forme prédéfini(s) de la mire. Les résultats de cette comparaison permettent de définir au moins une partie des paramètres de correction. Une déformation du contour de l'image, par exemple une modification locale de la courbure, de l'orientation ou de l'épaisseur (flou) peut aussi être compensée. Il peut ainsi être prévu d'estimer un paramètre représentatif d'un flou dans la mire M telle que projetée. En fonction par exemple du dépassement ou non d'un seuil de netteté par le paramètre estimé, une compensation associée peut être intégrée dans les paramètres de correction. Ce type de compensation peut être appliqué zone par zone. En cas de réduction du nombre de pixels "actifs" pour limiter un effet de flou dans une certaine zone, un ratio de pixels "actif/inactif" peut être recalculé dans cette zone afin de compenser la baisse de flux liée à la réduction de pixels utilisés. On peut corriger l'épaississement de certaines lignes, ce qui s'avère intéressant, par exemple pour du dessin au trait ou du texte.

Les paramètres de correction peuvent aussi permettre, le cas échéant, de modifier des durées ou des fréquences d'activation des pixels 30 du modulateur 3 afin de compenser une perte de luminance de l'image projetée F3, notamment près de la périphérie du faisceau lumineux transmis par l'optique de projection 18.

Après ces étapes, la phase de calibration 50 peut se terminer. Alternativement, on peut optionnellement tester la pertinence des paramètres de correction en réitérant les étapes 52 et 53, ce qui peut éventuellement permettre d'affiner les paramètres de correction. Egalement, la phase de calibration peut se décomposer en plusieurs sous-phases, en particulier lorsque le module optique 1 présente plusieurs modes de fonctionnement qui ont un impact sur la forme, le découpage ou l'homogénéité du faisceau sortant 40 souhaité.

Ensuite, le module optique 1 peut fonctionner dans un véhicule, en particulier un véhicule automobile, en ayant une unité de contrôle 16 qui pilote le modulateur 3, de façon à convertir systématiquement la première commande d'affichage en une deuxième commande d'affichage qui prend en compte les paramètres de correction déterminés lors de la phase de calibration 50.

Ainsi, dans le cas non limitatif de la figure 4, on peut voir qu'à la suite des étapes 60 et 61, respectivement de mise en marche du module optique 1 et de réception par le modulateur 3 de la première commande (i.e. commande sans prise en compte de défauts géométriques), l'unité de contrôle 16 récupère à l'étape 55, dans la mémoire 16a, les informations représentatives des paramètres de correction. Ceci permet de commander le modulateur 3 de façon ajustée, lors d'une étape 56 d'exécution de la deuxième fonction de commande d'affichage.

L'étape 62 de génération d'une configuration d'utilisation des pixels, fonctionnellement similaire à l'étape 52, conduit alors à personnaliser l'utilisation du modulateur 3 pour compenser les défauts géométriques spécifiquement identifiés lors de la phase de calibration 50.

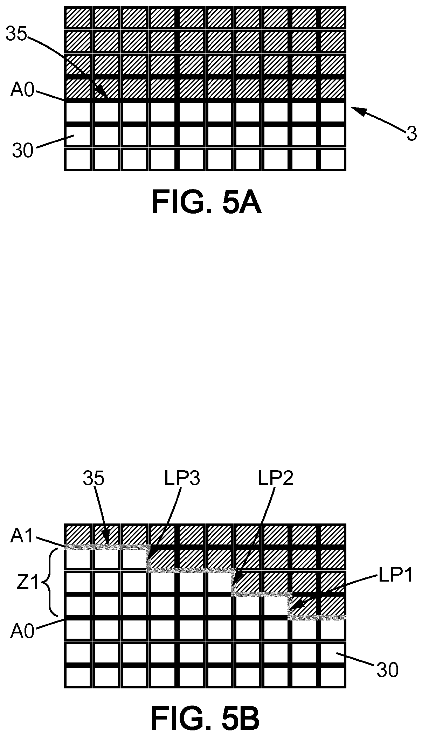

En référence aux figures 5A et 6A, on peut voir un effet visible de distorsion qui peut affecter la projection d'une délimitation horizontale ou de coupure 35. L'image projetée F3, peut présenter un défaut d'éclairage, par exemple dans les coins de l'écran de projection E1 (décalage sur les bords, visible sur la figure 6A). Lorsque le module optique 1 présente de tels défauts géométriques, ici pour un faisceau segmenté, le procédé peut être mis en oeuvre afin que l'utilisation des pixels 30 soit réorganisée avec un dézonage des délimitations entre les pixels actifs pour former le rayonnement R2 et les pixels inactifs. Ici dans cet exemple non limitatif, les pixels 30 sont suffisamment nombreux pour pouvoir correspondre à une résolution de moins de 1°, de préférence de l'ordre de 0,1° ou moins. De plus, la zone supérieure du modulateur 3 peut présenter un surplus de pixels 30 par rapport aux besoins en pixels initialement prévus, afin de disposer de la marge nécessaire pour appliquer l'effet correctif.

Le processus illustré sur la figure 4 ou un processus similaire est alors appliqué pour prendre en compte les paramètres de correction, afin de compenser l'effet de distorsion montré à droite de la figure 6A. En pratique, ici pour une zone de coin de la matrice de micro-miroirs 6, l'allumage des pixels qui était prévu avec la délimitation horizontale à un niveau de hauteur A0, comme visible sur la figure 5A, est modifié. Par l'effet de conversion de la première commande d'affichage en une deuxième commande d'affichage, on peut alors obtenir pour la même zone de coin, une distribution de pixels 30 très différente, illustrée sur la figure 5B. Ici, la séparation au niveau de hauteur A0 est remplacée par un dégradé avec une montée progressive du niveau de hauteur des pixels 30 rendus actifs, jusqu'à un niveau de hauteur maximum A1. Les portions de rangée ajoutées LP1, LP2 et LP3 permettent de compenser le défaut d'éclairage localisé dans les zones de coin. En référence à la figure 5B, la zone de marge Z1 qui a été ajoutée résulte de la définition des paramètres de corrections obtenus lors de la phase de calibration 50. Cet exemple pour la zone de marge Z1 est pris dans le coin supérieur gauche de ce qui est représenté en figure 6A.

Bien entendu, d'autres zones de la matrice de micro-miroirs 6 peuvent traitées par soustraction de pixels 30, pour éviter un excès d'éclairage. En effet, l'unité de contrôle 16 associée au module optique 1 peut aussi bien supprimer ou ajouter des pixels 30, par exemple sous la forme de lignes ou portions de lignes de pixels LP1, LP2, LP3, de colonnes ou portions colonnes de pixels.

Après implémentation et prise en compte des paramètres de correction, en particulier pendant chaque utilisation du module optique 1 dans un véhicule automobile du module optique 1, l'image F3 projetée sur l'écran E1 est plus conforme à l'image souhaitée de la première commande d'affichage F1. Dans certains cas où le module optique 1 est utilisé à des fins d'éclairage (notamment dans le cas de feux de route ou feux de code), le fait de neutraliser ou atténuer des pixels 30 permet de s'assurer que des déformations ou effets de distorsion ne conduisent pas à éblouir des participants à la circulation, ou seulement dans les limites réglementaires.

La mémoire 16a peut optionnellement permettre de stocker un état de configuration par défaut des micro-miroirs 12 et cet état peut être modifié par prise en compte des paramètres de correction. Un tel changement correspond alors à une modification de la commande d'affichage. Bien entendu, la façon d'ajuster la répartition entre pixels actif et pixels inactifs, en modifiant la commande d'affichage, peut être réalisée suivant de nombreuses variantes.

Le procédé de correction/rattrapage de défauts géométriques peut fonctionner pour corriger à la fois un décentrage et une ou plusieurs déformations par distorsion, et le cas échéant certaines aberrations plus localisées.

Un des avantages du module optique 1 est de permettre de projeter un faisceau lumineux qui peut être homogène, de sorte que l'optique de projection 18 de ce module optique 1 est perçue comme parfaitement assemblée, sans pour autant recourir en réalité à un mode de production et d'assemblage qui serait fastidieux ou excessivement couteux.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, alors que le module optique 1 a été illustré pour un cas dans lequel l'écran de projection E1 est défini intérieurement par rapport à la paroi transparente formant la glace du couvercle 14b transparent, on comprend qu'une partie du couvercle 14b transparent ou autre élément formant partie du boîtier externe 14 peut définir l'écran de projection. L'optique de projection 18 peut par exemple être focalisée sur un film formé sur le côté externe de la glace plutôt que sur un écran distinct.

Egalement, des fonctions additionnelles peuvent être implémentées en fonction des besoins. Par exemple, dans le contexte d'une imagerie optique de grand angle (ouverture numérique de 0,5 ou 0,6 ou 0,7, à titre d'exemple non limitatif), on comprend qu'il peut être ajouté une indication ou marquage au sein du faisceau lumineux sortant 40. L'utilisation d'un modulateur spatial pixellisé à haute définition 3 et la correction des aberrations permet en effet de former des caractères (lettres, chiffres ou similaires) avec une résolution suffisante pour permettre d'afficher à l'attention de personnes externes au véhicule des messages ou des pictogrammes qui sont par exemple représentatifs de l'activation d'une fonctionnalité ou d'un contexte de fonctionnement du véhicule.

## Revendications

1. Procédé de rattrapage de défauts géométriques dans un faisceau lumineux projeté par un module optique (1) d'un véhicule automobile, le module optique (1) comportant :
- un dispositif d'imagerie, pourvu d'un modulateur spatial pixellisé à haute définition (3) et d'une optique de projection (18),
- une source lumineuse (2) pour générer de la lumière destinée au modulateur (3),
le procédé comprenant les étapes consistant essentiellement à :
- recevoir une première commande d'affichage (F1) d'une image à projeter, destinée au modulateur (3) ;
- transformer la première commande d'affichage (F1) en une deuxième commande d'affichage (F2) qui prend en compte des paramètres de correction,
les paramètres de correction étant prédéfinis sur la base d'une identification de défauts géométriques qui sont propres à l'optique de projection (18), ce grâce à quoi le modulateur (3) est piloté de façon à ce que l'image effectivement projetée (F3) par utilisation du dispositif d'imagerie corresponde mieux à l'image à projeter que sans la prise en compte desdits paramètres de correction,
dans lequel l'optique de projection définit une ouverture numérique supérieure à 0,5.

2. Procédé selon la revendication 1, dans lequel la deuxième commande d'affichage (F2) se différencie notamment de la première commande d'affichage (F1) par l'activation sélective de tout ou partie d'une rangée (LP3) de pixels (30), définie dans une zone de marge par le modulateur (3).

3. Procédé selon la revendication 1 ou 2, dans lequel les paramètres de correction sont adaptés pour modifier des statuts d'activation des pixels (30) définis par le modulateur (3), afin de compenser l'un au moins parmi les défauts suivants :
- un décalage latéral du contour du faisceau lumineux transmis par l'optique de projection (18) ;
- une déformation du contour du faisceau lumineux transmis par l'optique de projection (18).

4. Procédé selon l'une quelconque des revendications précédentes, dans lequel les paramètres de correction sont adaptés pour modifier des durées ou des fréquences d'activation des pixels (30) du modulateur (3) afin de compenser une perte de netteté de l'image projetée (F3), notamment près de la périphérie du faisceau lumineux transmis par l'optique de projection (18).

5. Procédé selon l'une quelconque des revendications précédentes, dans lequel les paramètres de correction et/ou la deuxième commande d'affichage (F2) sont stockés dans une mémoire (16a) à la disposition d'une unité de contrôle (16), l'unité de contrôle (16) étant adaptée pour activer la deuxième commande d'affichage (F2).

6. Système lumineux (5) d'un véhicule automobile, permettant la mise en œuvre du procédé selon l'une quelconque des revendications précédentes, le système (5) comportant :
- un module optique (1) comprenant :
- un dispositif d'imagerie, pourvu d'un modulateur spatial pixellisé à haute définition (3) et d'une optique de projection (18),
- une source lumineuse(2) pour générer de la lumière destinée au modulateur (3), et
- une unité de contrôle (16), conçue et agencée pour piloter le modulateur (3) et adapté pour recevoir des premières commandes d'affichage (F1), chacune des premières commandes d'affichage (F1) étant représentative d'une image à projeter ;
l'unité de contrôle (16) comprenant des moyens d'ajustement (17) pour convertir chaque première commande d'affichage (F1) en une deuxième commande d'affichage (F2) qui prend en compte des paramètres de correction,
les paramètres de correction étant prédéfinis sur la base d'une identification de défauts géométriques qui sont propres à l'optique de projection (18), l'unité de contrôle (16) pilotant le modulateur (3) en fonction des deuxièmes commandes d'affichage (F2) afin que l'image effectivement projetée (F3) par le dispositif d'imagerie corresponde mieux à l'image à projeter que sans la prise en compte des paramètres de correction,
dans lequel l'optique de projection définit une ouverture numérique supérieure à 0,5.

7. Système selon la revendication 6, dans lequel le modulateur spatial pixellisé à haute définition (3) comprend une matrice de micro-miroirs (6), les micro-miroirs (12) de la matrice de micro-miroirs (3) étant déplaçables chacun entre :
- une première position dans laquelle le micro-miroir (12) est agencé pour réfléchir des rayons lumineux (R1) lui parvenant de la source lumineuse (2) ou d'une unité d'émission de rayons lumineux (20) qui inclut la dite source lumineuse (2), en direction de l'optique de projection (18),
- et une deuxième position dans laquelle le micro-miroir (12) est agencé pour réfléchir les rayons lumineux (R1) lui parvenant de la source lumineuse (2) ou d'une unité d'émission de rayons lumineux (20) qui inclut la dite source lumineuse (2), à l'écart de l'optique de projection (18).

8. Système selon la revendication 7, dans lequel l'unité de contrôle (16) dispose d'une mémoire (16a) stockant les paramètres de correction et/ou des informations représentatives des deuxièmes commandes d'affichage (F2).

9. Système selon la revendication 7 ou 8, dans lequel le dispositif d'imagerie est adapté pour projeter un faisceau lumineux sortant (40) de type segmenté présentant au moins une coupure.

10. Système selon l'une quelconque des revendications 7 à 9, comprenant deux modules optiques (1) comportant chacun :
- un dispositif d'imagerie, pourvu d'un modulateur spatial pixellisé à haute définition(3) et d'une optique de projection (18), et
- une source lumineuse (2) pour générer de la lumière destinée au modulateur (3), chaque faisceau lumineux transmis par l'une des optiques de projection (18) étant reçu sur au moins un écran de projection (E1),
l'unité de contrôle (16) étant adaptée pour piloter le modulateur (3) de chacun des deux modules optiques (1) en prenant en compte un premier ensemble de paramètres de correction associé à un premier des deux modules optiques (1) et un deuxième ensemble de paramètres de correction associé à un deuxième des deux modules optiques,
les paramètres de correction du premier ensemble étant prédéfinis sur la base d'une identification de défauts géométriques qui sont propres à l'optique de projection (18) dans le premier module optique, tandis que les paramètres de correction du deuxième ensemble sont prédéfinis sur la base d'une identification de défauts géométriques qui sont propres à l'optique de projection (18) dans le deuxième module optique.

11. Feu d'éclairage et/ou signalisation d'un véhicule automobile pour projeter au moins un faisceau lumineux, le feu comprenant :
- un boîtier ;
- une glace de fermeture ; et
- un système lumineux selon l'une quelconque des revendications 6 à 10.

12. Ensemble lumineux, présentant un premier composant et un deuxième composant formés par :
- deux feux ;
- deux projecteurs ; ou
- un feu et un projecteur,
l'ensemble lumineux comprenant un système selon la revendication 10, lesdits deux modules optiques (1) étant répartis l'un dans le premier composant et l'autre dans le deuxième composant.

## Patentansprüche

1. Verfahren zur Korrektur geometrischer Fehler in einem Lichtstrahl, der von einem optischen Modul (1) eines Kraftfahrzeugs projiziert wird, wobei das optische Modul (1) umfasst:
- eine Abbildungsvorrichtung, die mit einem hochauflösenden pixelierten räumlichen Modulator (3) und einer Projektionsoptik (18) versehen ist,
- eine Lichtquelle (2) zur Erzeugung von Licht für den Modulator (3), wobei das Verfahren im Wesentlichen die folgenden Schritte umfasst:
- Empfangen eines ersten Anzeigebefehls (F1) eines zu projizierenden Bildes für den Modulator (3);
- Umwandeln des ersten Anzeigebefehls (F1) in einen zweiten Anzeigebefehl (F2), der Korrekturparameter berücksichtigt, wobei die Korrekturparameter auf der Grundlage einer Identifizierung geometrischer Fehler, die der Projektionsoptik (18) eigen sind, vordefiniert sind, wodurch der Modulator (3) so gesteuert wird, dass das tatsächlich projizierte Bild (F3) durch Verwendung der Abbildungsvorrichtung besser dem zu projizierenden Bild entspricht als ohne Berücksichtigung der Korrekturparameter, wobei die Projektionsoptik eine numerische Apertur größer als 0,5 definiert.

2. Verfahren nach Anspruch 1, wobei sich der zweite Anzeigebefehl (F2) insbesondere vom ersten Anzeigebefehl (F1) durch die selektive Aktivierung aller oder eines Teils einer Reihe (LP3) von Pixeln (30) unterscheidet, die in einem Randbereich durch den Modulator (3) definiert ist.

3. Verfahren nach Anspruch 1 oder 2, wobei die Korrekturparameter angepasst sind, um Aktivierungszustände der durch den Modulator (3) definierten Pixel (30) zu modifizieren, um mindestens einen der folgenden Fehler zu kompensieren:
- eine seitliche Verschiebung der Kontur des durch die Projektionsoptik (18) übertragenen Lichtstrahls;
- eine Verformung der Kontur des durch die Projektionsoptik (18) übertragenen Lichtstrahls.

4. Verfahren nach einem der vorhergehenden Ansprüche, wobei die Korrekturparameter angepasst sind, um Dauer oder Frequenz der Aktivierung der Pixel (30) des Modulators (3) zu modifizieren, um einen Schärfeverlust des projizierten Bildes (F3), insbesondere nahe der Peripherie des durch die Projektionsoptik (18) übertragenen Lichtstrahls, zu kompensieren.

5. Verfahren nach einem der vorhergehenden Ansprüche, wobei die Korrekturparameter und/oder der zweite Anzeigebefehl (F2) in einem Speicher (16a) zur Verfügung einer Steuereinheit (16) gespeichert sind, wobei die Steuereinheit (16) angepasst ist, um den zweiten Anzeigebefehl (F2) zu aktivieren.

6. Lichtsystem (5) eines Kraftfahrzeugs, das die Durchführung des Verfahrens nach einem der vorhergehenden Ansprüche ermöglicht, wobei das System (5) umfasst:
- ein optisches Modul (1), das umfasst:
- eine Abbildungsvorrichtung, die mit einem hochauflösenden pixelierten räumlichen Modulator (3) und einer Projektionsoptik (18) versehen ist,
- eine Lichtquelle (2) zur Erzeugung von Licht für den Modulator (3), und
- eine Steuereinheit (16), die konzipiert und angeordnet ist, um den Modulator (3) zu steuern und angepasst ist, um erste Anzeigebefehle (F1) zu empfangen, wobei jeder der ersten Anzeigebefehle (F1) repräsentativ für ein zu projizierendes Bild ist; wobei die Steuereinheit (16) Anpassungsmittel (17) umfasst, um jeden ersten Anzeigebefehl (F1) in einen zweiten Anzeigebefehl (F2) umzuwandeln, der Korrekturparameter berücksichtigt, wobei die Korrekturparameter auf der Grundlage einer Identifizierung geometrischer Fehler, die der Projektionsoptik (18) eigen sind, vordefiniert sind, wobei die Steuereinheit (16) den Modulator (3) entsprechend den zweiten Anzeigebefehlen (F2) steuert, damit das tatsächlich projizierte Bild (F3) durch die Abbildungsvorrichtung besser dem zu projizierenden Bild entspricht als ohne Berücksichtigung der Korrekturparameter, wobei die Projektionsoptik eine numerische Apertur größer als 0,5 definiert.

7. System nach Anspruch 6, wobei der hochauflösende pixelierte räumliche Modulator (3) eine Matrix von Mikrospiegeln (6) umfasst, wobei die Mikrospiegel (12) der Matrix von Mikrospiegeln (3) jeweils zwischen folgenden Positionen bewegbar sind:
- einer ersten Position, in der der Mikrospiegel (12) angeordnet ist, um Lichtstrahlen (R1), die von der Lichtquelle (2) oder einer Einheit zur Emission von Lichtstrahlen (20), die die Lichtquelle (2) enthält, in Richtung der Projektionsoptik (18) zu reflektieren,
- und einer zweiten Position, in der der Mikrospiegel (12) angeordnet ist, um die Lichtstrahlen (R1), die von der Lichtquelle (2) oder einer Einheit zur Emission von Lichtstrahlen (20), die die Lichtquelle (2) enthält, abseits der Projektionsoptik (18) zu reflektieren.

8. System nach Anspruch 7, wobei die Steuereinheit (16) über einen Speicher (16a) verfügt, der die Korrekturparameter und/oder Informationen, die repräsentativ für die zweiten Anzeigebefehle (F2) sind, speichert.

9. System nach Anspruch 7 oder 8, wobei die Abbildungsvorrichtung angepasst ist, um einen segmentierten Ausgangslichtstrahls (40) mit mindestens einer Abgrenzung zu projizieren.

10. System nach einem der Ansprüche 7 bis 9, umfassend zwei optische Module (1), die jeweils umfassen:
- eine Abbildungsvorrichtung, die mit einem hochauflösenden pixelierten räumlichen Modulator (3) und einer Projektionsoptik (18) versehen ist, und
- eine Lichtquelle (2) zur Erzeugung von Licht für den Modulator (3), wobei jeder Lichtstrahl, der durch eine der Projektionsoptiken (18) übertragen wird, auf mindestens einem Projektionsschirm (E1) empfangen wird,
wobei die Steuereinheit (16) angepasst ist, um den Modulator (3) jedes der beiden optischen Module (1) unter Berücksichtigung eines ersten Satzes von Korrekturparametern, der einem ersten der beiden optischen Module (1) zugeordnet ist, und eines zweiten Satzes von Korrekturparametern, der einem zweiten der beiden optischen Module zugeordnet ist, zu steuern,
wobei die Korrekturparameter des ersten Satzes auf der Grundlage einer Identifizierung geometrischer Fehler, die der Projektionsoptik (18) im ersten optischen Modul eigen sind, vordefiniert sind, während die Korrekturparameter des zweiten Satzes auf der Grundlage einer Identifizierung geometrischer Fehler, die der Projektionsoptik (18) im zweiten optischen Modul eigen sind, vordefiniert sind.

11. Beleuchtungs- und/oder Signalleuchte eines Kraftfahrzeugs zum Projizieren mindestens eines Lichtstrahls, wobei die Leuchte umfasst:
- ein Gehäuse;
- eine Abschlussscheibe; und
- ein Lichtsystem nach einem der Ansprüche 6 bis 10.

12. Lichteinheit, die eine erste Komponente und eine zweite Komponente aufweist, die gebildet werden durch:
- zwei Leuchten;
- zwei Scheinwerfer; oder
- eine Leuchte und einen Scheinwerfer,
wobei die Lichteinheit ein System nach Anspruch 10 umfasst, wobei die beiden optischen Module (1) eines in der ersten Komponente und das andere in der zweiten Komponente verteilt sind.

## Claims

1. Method for amending geometric defects in a light beam projected by an optical module (1) of a motor vehicle, the optical module (1) including:
- an imaging device, provided with a high-definition pixelated spatial modulator (3) and a projecting optic (18), and
- a light source (2) for generating light intended for the modulator (3),
the method comprising steps essentially consisting in:
- receiving a first command (F1) to display an image to be projected, intended for the modulator (3); and
- converting the first display command (F1) into a second display command (F2) that takes into account correction parameters,
the correction parameters being predefined on the basis of an identification of geometric defects that are specific to the projecting optic (18), by virtue of which the modulator (3) is controlled so that the image (F3) actually projected using the imaging device corresponds better to the image to be projected than without said correction parameters taken into account,
wherein the projection optics defines a numerical aperture greater than 0.5.

2. Method according to Claim 1, wherein the second display command (F2) in particular differs from the first display command (F1) in the selective activation of all or some of a row (LP3) of pixels (30), said row being defined in a marginal zone by the modulator (3).

3. Method according to Claim 1 or 2, wherein the correction parameters are suitable for modifying activation statuses of the pixels (30) defined by the modulator (3), in order to compensate for at least one among the following defects:
- a lateral shift of the outline of the light beam transmitted by the projecting optic (18); and
- a deformation of the outline of the light beam transmitted by the projecting optic (18).

4. Method according to any one of the preceding claims, wherein the correction parameters are suitable for modifying the durations or frequencies of activation of the pixels (30) of the modulator (3) in order to compensate for a loss of clearness in the projected image (F3), in particular close to the periphery of the light beam transmitted by the projecting optic (18).

5. Method according to any one of the preceding claims, wherein the correction parameters and/or the second display command (F2) are stored in a memory (16a) accessible to a control unit (16), the control unit (16) being suitable for activating the second display command (F2).

6. Luminous system (5) for a motor vehicle, allowing the method according to any one of the preceding claims to be implemented, the system (5) including:
- an optical module (1) comprising:
- an imaging device, provided with a high-definition pixelated spatial modulator (3) and a projecting optic (18), and
- a light source (2) for generating light intended for the modulator (3),
and
- a control unit (16) designed and arranged to control the modulator (3) and suitable for receiving first display commands (F1), each of the first display commands (F1) being representative of an image to be projected,
the control unit (16) comprising adjusting means (17) for converting each first display command (F1) into a second display command (F2) that takes into account correction parameters,
the correction parameters being predefined on the basis of an identification of geometric defects that are specific to each projecting optic (18), the control unit (16) controlling the modulator (3) depending on second display commands (F2) in order that the image (F3) actually projected by the imaging device corresponds better to the image to be projected than without the correction parameters taken into account,
wherein the projection optics defines a numerical aperture greater than 0.5.

7. System according to Claim 6, wherein the high-definition pixelated spatial modulator (3) comprises a digital micromirror device (6), the micromirrors (12) of the digital micromirror device (6) each being movable between:
- a first position in which the micromirror (12) is arranged to reflect light rays (R1) that come thereto from the light source (2) or from a light-ray emitting unit (20) that includes said light source (2), in the direction of the projecting optic (18),
- and a second position in which the micromirror (12) is arranged to reflect the light rays (R1) that come thereto from the light source (2) or from a light-ray emitting unit (20) that includes said light source (2), away from the projecting optic (18).

8. System according to Claim 7, wherein the control unit (16) has access to a memory (16a) storing the correction parameters and/or information representative of the second display commands (F2).

9. System according to Claim 7 or 8, wherein the imaging device is suitable for projecting a segmented output light beam (40) containing at least one cut-off.

10. System according to any one of Claims 7 to 9, comprising two optical modules (1) each including:
- an imaging device, provided with a high-definition pixelated spatial modulator (3) and a projecting optic (18), and
- a light source (2) for generating light intended for the modulator (3), each light beam transmitted by one of the projecting optics (18) being received on at least one projecting screen (E1),
the control unit (16) being suitable for controlling the modulator (3) of each of the two optical modules (1) while taking into account a first set of correction parameters that is associated with a first of the two optical modules (1) and a second set of correction parameters that is associated with a second of the two optical modules,
the correction parameters of the first set being predefined on the basis of an identification of geometric defects that are specific to the projecting optic (18) in the first optical module, whereas the correction parameters of the second set are predefined on the basis of an identification of geometric defects that are specific to the projecting optic (18) in the second optical module.

11. Lighting and/or signalling lamp of a motor vehicle for projecting at least one light beam, the lamp comprising:
- a housing;
- a closing outer lens; and
- a luminous system according to any one of Claims 6 to 10.

12. Luminous assembly having a first component and a second component that are formed by:
- two lamps;
- two headlamps; or
- a lamp and a headlamp,
the luminous assembly comprising a system according to Claim 10, said two optical modules (1) being distributed one in the first component and the other in the second component.
